# EUROPÄISCHE PATENTSCHRIFT

(11) **EP 1 432 225 B1**
(45) Veröffentlichungstag und Bekanntmachung des Hinweises auf die Patenterteilung: **30.04.2008**
(21) Anmeldenummer: 02028534.2
(22) Anmeldetag: 20.12.2002
(51) Int. Cl.: H04N 1/00

(54) **Hardcopyvorrichtung zur Ausgabe einer Hardcopy**
Hardcopy device for outputting a hardcopy
Dispositif d'impression sur un support d'impression

(43) Veröffentlichungstag der Anmeldung: 23.06.2004
(73) Patentinhaber: Agfa-Gevaert HealthCare GmbH, 51373 Leverkusen (DE)
(72) Erfinder: Müller, Jürgen, 81545 München (DE)

(56) Entgegenhaltungen:
- US-A- 4 812 914
- US-A- 5 299 033
- US-A1- 2002 043 637
- US-B1- 6 208 437
- PATENT ABSTRACTS OF JAPAN vol. 017, no. 337 (E-1388), 25. Juni 1993 (1993-06-25) & JP 05 041761 A (MATSUSHITA GRAPHIC COMMUN SYST INC), 19. Februar 1993 (1993-02-19)
- PATENT ABSTRACTS OF JAPAN vol. 2002, no. 06, 4. Juni 2002 (2002-06-04) & JP 2002 060117 A (FUJI PHOTO FILM CO LTD), 26. Februar 2002 (2002-02-26)
- PATENT ABSTRACTS OF JAPAN vol. 2000, no. 21, 3. August 2001 (2001-08-03) & JP 2001 096847 A (CANON INC), 10. April 2001 (2001-04-10)

## Beschreibung

Die vorliegende Erfindung betrifft eine Hardcopyvorrichtung zur Ausgabe einer Hardcopy einer durch einen fotostimulierbaren Bildträger gewonnenen Bildinformation.

Eine solche gattungsgemäße Hardcopyvorrichtung ist aus der DE 38 17 625 bekannt. Mit Hilfe dieser Hardcopyvorrichtung wird eine Thermokopie, also eine Hardcopy, der gewonnenen Bildinformation durch Thermosublimationstransfer hergestellt. Dabei wird eine Farbstoffträgerfolie gegenüber einem Empfängermaterial in einen genau definierten Abstand gebracht und pixelweise entsprechend der von der Farbstoffträgerfolie auf das Empfängermaterial zu übertragenden Farbdichte erwärmt. Wie in der zitierten Druckschrift beschrieben, kann für das pixelweise Erhitzen der Farbstoffträgerfolie ein zeilenweise über die Farbstoffträgerfolie geführter Laserstrahl verwendet werden. Der Laserstrahl wird dabei entsprechend der zu übertragenden Farbdichte moduliert. Grundsätzlich kann die Farbstoffträgerfolie auch durch ein herkömmliches Heizelement erhitzt werden.

Eine äußerst wichtige Verwendung einer Hardcopyvorrichtung stellt ein Einsatz als Komponente für ein digitales Radiografieverfahren dar. In einem solchen Radiografieverfahren sind jedoch noch weitere Komponenten erforderlich, die sinnvollerweise zusammen mit der Hardcopyvorrichtung in einem Röntgenraum angeordnet werden müssen. Nach einer Röntgenaufnahme muss nämlich zunächst ein Scanner bereitgestellt werden, durch den der fotostimulierbare Bildträger, der zur Aufnahme verwendet wurde, ausgelesen wird, um die durch den fotostimulierbaren Bildträger gewonnene Bildinformation zu erfassen. Außerdem ist vorteilhafterweise eine Workstationeinrichtung vorgesehen, mit Hilfe der die erfasste Bildinformation sichtbar gemacht werden kann, wobei in der Regel zusätzlich eine Modifizierung durch einen Anwender des Radiografieverfahrens durchgeführt wird. Anschließend daran wird vorteilhafterweise eine Hardcopyvorrichtung zur Ausgabe einer Hardcopy der gewonnenen Bildinformation benötigt, um das Ergebnis der Röntgenuntersuchung zu dokumentieren. Wie bereits oben erwähnt, sollte dieser gesamte Prozess in einem Röntgenraum durchführbar sein, so dass ein behandelnder Arzt einen Patienten während der Anwendung des Radiografieverfahrens nicht verlassen muss, was einerseits zu einer Zeitersparnis führt und andererseits für den Patienten angenehmer ist. Der Röntgenraum ist aufgrund einer notwendigen Abschirmung häufig räumlich äußerst begrenzt, so dass in der Regel nur eine der für das Radiografieverfahren wesentlichen Komponenten in dem Röntgenraum untergebracht werden kann.

Aus JP 05 041761 A ist ein Drucker bekannt, welcher an einer Wand montierbar ist. Auf einer Rolle befindliches Druckerpapier wird in senkrechter Richtung transportiert, mit Informationen beschrieben und ausgegeben. Dieser Drucker ist für die Verwendung in einem digitalen Radiografieverfahren nur bedingt geeignet, da dieser die bei diesem Verfahren erforderlichen Arbeitsabläufe, die sog. Workflows, nicht unterstützt.

Es ist daher Aufgabe der Erfindung, eine Hardcopyvorrichtung bereitzustellen, die auch in beengten Räumlichkeiten gut untergebracht werden kann und darüber hinaus für die Verwendung in einem digitalen Radiografieverfahren besonders geeignet ist.

Zur Lösung dieser Aufgabe dient eine gattungsgemäße Hardcopyvorrichtung, die derart für eine Wandmontage ausgebildet ist, dass eine größte Seitenfläche der Hardcopyvorrichtung im Wesentlichen parallel zu einer Wand an der Wand montierbar ist. Da eine Wandmontage auch in sehr beengten Räumlichkeiten möglich ist, gewährleistet die Erfindung eine Anordnung der Hardcopyvorrichtung im Röntgenraum. Dort wurde bisher ohnehin ein konventioneller Leuchtschirm verwendet, der durch die für eine Wandmontage ausgebildete Hardcopyvorrichtung ersetzt werden kann. Die Wandmontage ermöglicht außerdem eine komfortable Bedienung der Hardcopyvorrichtung im Stehen. Da die Hardcopyvorrichtung außerdem mit einer größten Seitenfläche im Wesentlichen parallel zu einer Wand an die Wand montierbar ist, ist auch gewährleistet, dass die Hardcopyvorrichtung nicht behindernd herausragt. In Fällen, in denen die Hardcopyvorrichtung wegen Platzmangels vorher in einem anderen Raum untergebracht werden musste, kann jetzt ein kompletter Röntgenarbeitsplatz innerhalb eines Röntgenraums realisiert werden. Darüber hinaus ist vorgesehen, dass die Hardcopyvorrichtung eine Kassettenhalterung zur Lagerung mindestens einer Kassette mit mindestens einem fotostimulierbaren Bildträger und/oder zum Bereitstellen einer Kassette mit mindestens einem fotostimulierbaren Bildträger für einen Scanner aufweist. Insbesondere dann, wenn der Scanner in unmittelbarer Nähe der Hardcopyvorrichtung angeordnet ist, ist diese Weiterbildung besonders zweckmäßig. Die Hardcopyvorrichtung erfüllt damit zwei Funktionen, so dass ein besonders kompaktes System bereitgestellt wird. Außerdem ist ein Scanner zum Erfassen der Bildinformation des in der Kassette bereitgestellten fotostimulierbaren Bildträgers vorgesehen.

Eine erste Weiterbildung der Erfindung sieht vor, dass die Hardcopyvorrichtung zu einer hängenden Wandmontage mindestens eine Ausgestaltung zur Aufhängung, insbesondere mindestens ein Aufhängeelement aufweist. Bei der Ausgestaltung zur Aufhängung kann es sich folglich um ein Aufhängeelement handeln, andererseits ist jedoch eine Vertiefung oder eine Öffnung denkbar, in die entsprechende Befestigungselemente zur Befestigung der Hardcopyvorrichtung an der Wand eingreifen können.

Die mindestens eine Ausgestaltung zur Aufhängung kann dabei derart ausgebildet sein, dass die Hardcopyvorrichtung höhenverstellbar ist. Alternativ oder zusätzlich kann auch das Befestigungselement so ausgebildet sein, dass eine Höheverstellbarkeit der Hardcopyvorrichtung gewährleistet ist. Die Variierung der Aufhängehöhe hat mehrere Vorteile. Einerseits kann auf diese Weise eine Bedienung im Sitzen oder im Stehen erfolgen, andererseits kann die Höhe der Hardcopyvorrichtung der Größe eines Anwenders angepasst werden. Daneben ist es mit Hilfe dieser Ausgestaltung möglich, die Hardcopyvorrichtung in eine Position zu überführen, die andere Tätigkeiten, die ebenfalls in dem Raum durchgeführt werden, in dem die Hardcopyvorrichtung aufgehängt ist, nicht behindert.

Ein Gehäusebereich der Hardcopyvorrichtung kann ein Halterungselement der Kassettenhalterung bilden, auf dem die mindestens eine Kassette angeordnet werden kann. Auf diese Weise kann einerseits Material gespart werden und andererseits eine äußerst stabile Oberfläche für die Anordnung von Kassetten zur Verfügung gestellt werden.

Die Kassettenhalterung kann allerdings alternativ oder zusätzlich auch ein Halterungselement aufweisen, das an einem Gehäuse der Hardcopyvorrichtung insbesondere lösbar befestigt ist. Ein solches Halterungselement kann dem Zweck der Kassettenhalterung optimal angepasst werden. Die lösbare Befestigung gewährleistet außerdem eine hohe Flexibilität.

Eine weitere besonders vorteilhafte Ausgestaltung der Erfindung sieht vor, dass die Kassettenhalterung ein Halterungselement aufweist, das im Wesentlichen vor oder unter einem Gehäuse der Hardcopyvorrichtung angeordnet ist. Insbesondere durch die Anordnung der Hardcopyvorrichtung unter dem Gehäuse wird wertvoller Platz gespart.

Die Kassettenhalterung kann vorteilhafterweise derart ausgebildet sein, dass die von der Kassettenhalterung aufgenommene mindestens eine Kassette im Wesentlichen parallel zu einer größten Seitenfläche der Hardcopyvorrichtung angeordnet ist. Die mindestens eine Kassette ragt daher nicht mehr als notwendig hervor und ist flach, also mit einer geringen Tiefe, angeordnet.

Die Hardcopyvorrichtung kann außerdem eine Halterung für mindestens einen Hardcopyrohling, insbesondere einen Film, und/oder einer Halterung für mindestens eine Hardcopy mit der Bildinformation aufweisen. Während die Halterung für mindestens einen Hardcopyrohling dazu dient, in unmittelbarer Nähe genügend Hardcopyrohlinge bereitzustellen und somit einen Engpass zu vermeiden, dient die Halterung für mindestens eine Hardcopy mit der Bildinformation zur temporären Lagerung.

Die Halterung für den mindestens einen Hardcopyrohling und/oder die Halterung für die mindestens eine Hardcopy kann derart ausgebildet und angeordnet sein, dass der von der Halterung aufgenommene mindestens eine Hardcopyrohling und/oder die von der Halterung aufgenommene mindestens eine Hardcopy im Wesentlichen parallel zu einer größten Seitenfläche der Hardcopyvorrichtung angeordnet ist. Auch der mindestens eine Hardcopyrohling und/oder die mindestens eine Hardcopy können daher äußerst flach und daher platzsparend positioniert werden.

Vorteilhafterweise ist die Halterung für den mindestens einen Hardcopyrohling innerhalb eines Gehäuses der Hardcppyvorrichtung angeordnet, so dass die Hardcopyvorrichtung direkt auf den mindestens einen Hardcopyrohling zugreifen kann.

Die Halterung für die mindestens eine Hardcopy kann im Wesentlichen unter einem Gehäuse der Hardcopyvorrichtung angeordnet sein, um erstens die Hardcopy direkt nach ihrer Ausgabe aus der Hardcopyvorrichtung aufzunehmen und außerdem um möglichst flach an der Wand anzuliegen.

Eine besonders vorteilhafte Weiterbildung der Erfindung sieht vor, dass die Hardcopyvorrichtung derart ausgebildet ist, dass ein Hardcopyrohling und/oder eine Hardcopy innerhalb der Hardcopyvorrichtung im Wesentlichen parallel zu einer größten Seitenfläche der Hardcopyvorrichtung bearbeitbar und/oder bewegbar ist. Diese nahezu parallele Anordnung ermöglicht eine akzeptable Gerätetiefe, aber außerdem auch eine bedienerfreundliche Eingabe der Hardcopyrohlinge sowie eine bedienerfreundliche Entnahme der fertigen Hardcopy.

Weitere Einzelheiten, Merkmale und Vorteile der Erfindung ergeben sich aus den im Folgenden anhand von Zeichnungen beschriebenen Ausführungsbeispielen. In der Beschreibung der Ausführungsbeispiele wird die Hardcopyvorrichtung als Hardcopyeinrichtung bezeichnet.

Es zeigen:
- Fig.1: ein schematisch dargestellter Aufbau einer Ausführungsform einer Vorrichtung mit einer erfindungsgemäßen Hardcopyeinrichtung;
- Fig. 2: eine schematische Darstellung einer weiteren Ausführungsform einer Vorrichtung mit einer erfindungsgemäßen Hardcopyeinrichtung;
- Fig. 3: eine schematisch dargestellte Frontansicht eines Scanners;
- Fig. 4: eine schematisch dargestellte Rückansicht eines Scanners;
- Fig. 5: eine teilweise als Querschnitt dargestellte schematische Ansicht eines Scanners;
- Fig. 6: eine schematisch dargestellte Frontansicht einer erfindungsgemäßen Hardcopyeinrichtung;
- Fig. 7: eine schematisch dargestellte Rückansicht einer erfindungsgemäßen Hardcopyeinrichtung; und
- Fig. 8: eine teilweise geschnittene Darstellung einer erfindungsgemäßen Hardcopyeinrichtung.

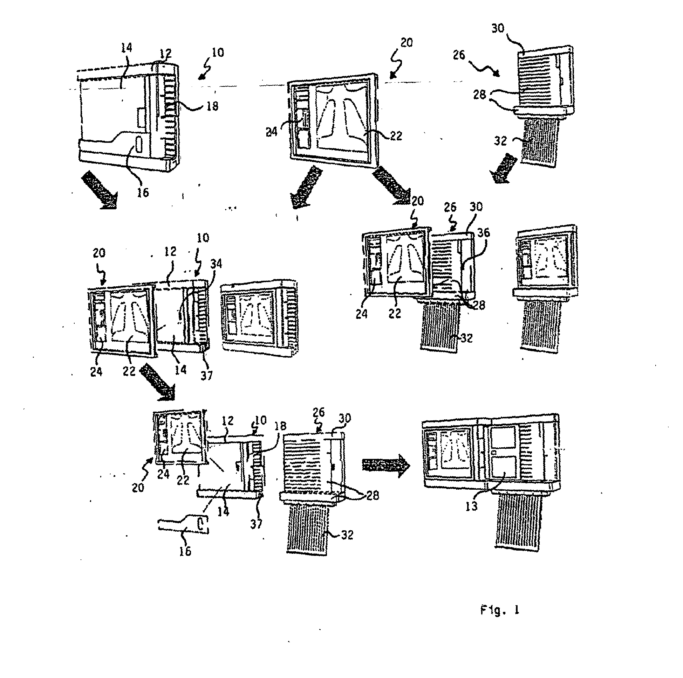

Figur 1 zeigt eine modular aufgebaute Vorrichtung zur Durchführung eines digitalen Radiographie-Verfahrens. Die hier dargestellte Ausführungsform dieser Vorrichtung umfasst im Wesentlichen bis zu drei Komponenten.

Eine erste Komponente bildet ein Scanner 10 mit einem Gehäuse 12. Der Scanner 10 dient den Erfassen einer Bildinformation eines in einer Kassette 13 bereitgestellten fotostimulierbaren Bildträgers, welcher eine Phosphorschicht umfaßt. Die Kassette 13 mit dem auszulesenden Bildträger wird hierzu einer seitlichen Öffnung 18 des Scanners 10 zugeführt. Dies ist im rechten unteren Teil der Figur 1 beispielhaft dargestellt. Aus Gründen einer besseren Anschaulichkeit wurde auf die Darstellung der Kassette 13 in den anderen Figurenteilen verzichtet.

Der Scanner 10 weist im Frontbereich, d.h. in einem Bereich vor dem Scanner 10, eine Kassettenhalterung auf, welche zur Aufnahme mindestens einer Kassette 13 mit dem auszulesenden Bildträger ausgebildet ist. Ein Halterungselement 14 der Kassettenhalterung wird hierbei durch einen Gehäusebereich, im dargestellten Beispiel eine Frontplatte, des Scanners 10 gebildet. Ein weiteres, abnehmbares Halterungselement 16 ist derart am Gehäuse 12 des Scanners 10 angeordnet, daß mindestens eine Kassette 13 zwischen den beiden Halterungselementen 14 und 16 gehalten werden kann. In der Kassettenhalterung können Kassetten 13 im Frontbereich des Scanners 10 gelagert werden, bevor oder nachdem sie im Scanner 10 ausgelesen werden bzw. worden sind.

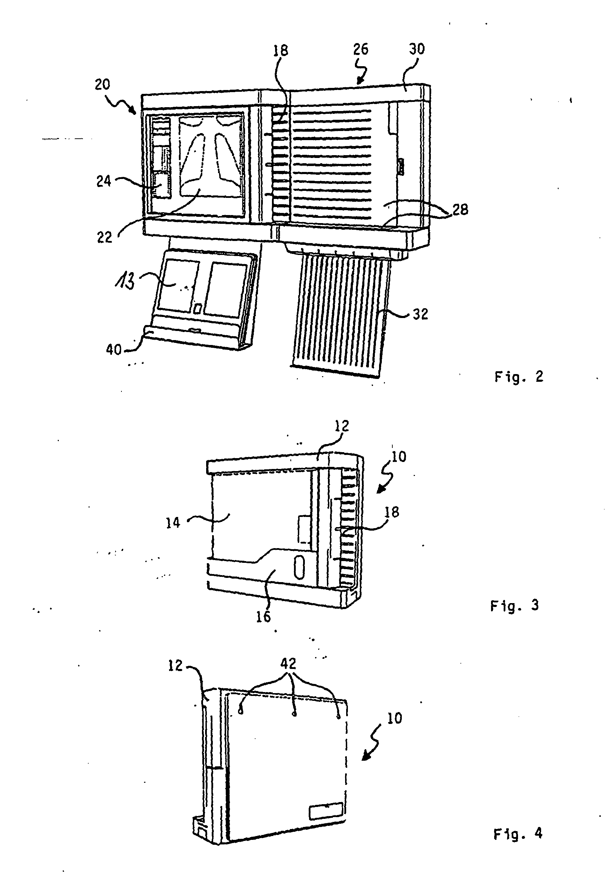

Alternativ oder zusätzlich kann aber auch eine laterale Kassettenhalterung (nicht dargestellt) vorgesehen sein, die seitlich des Scanners 10 positioniert ist und auf diese Weise gleichzeitig dazu dient, eine oder mehrere Kassetten 13 für den Scanprozess bereitzustellen. Vorzugsweise ist die laterale Kassettenhalterung derart ausgebildet und im Bereich der Öffnung 18 des Scanners 10 angeordnet, dass die von ihr aufgenommenen Kassetten direkt der Öffnung 18 des Scanners 10 zugeführt werden können. Wie weiter unten im Zusammenhang mit dem in Figur 2 dargestellten Ausführungsbeispiel noch näher erläutert wird, kann die Kassettenhalterung auch unterhalb des Scanners 10 positioniert werden.

Da der in Figur 1 dargestellte Scanner 10 dazu geeignet ist, Bildinformationen von Bildträgern unterschiedlicher Größe zu erfassen, müssen auch die Halterungelemente 14 bzw. 16 der Kassettenhalterung derart ausgebildet sein, dass sie unterschiedlich große Kassetten aufnehmen können. Aus diesem Grund ist es auch zweckmäßig, mehrere Kassettenhalterungen vorzusehen, die für jeweils eine Kassettengröße optimal dimensioniert sind. Generell erhöht die Anordnung einer Kassettenhalterung in der unmittelbaren Nähe des Scanners 10 die Geschwindigkeit des Arbeitsvorgangs, der mit dem Auslesen der Bildinformation verbunden ist. Vorteilhafterweise ist die Kassettenhalterung stets parallel zum Scanner 10 angeordnet.

Als zweite Komponente der Vorrichtung ist eine Workstationeinrichtung 20 zum Sichtbarmachen der erfassten Bildinformation vorgesehen. Neben einer zentralen Recheneinheit (nicht dargestellt), in welcher die im Scanner 10 erfassten, digitalen Bildinformationen verarbeitet und/oder gespeichert werden können, umfasst die Workstationeinrichtung 20 einen Bildschirm 22 zur visuellen, insbesondere graphischen, Darstellung der erfassten Bildinformation. Um Platz zu sparen, wird als Bildschirm 22 vorzugsweise ein Flachbildschirm auf der Basis von Flüssigkristallen (LCDs) und Dünnschichttransistoren (TFTs) eingesetzt.

Zusätzlich zur Darstellung der erfassten Bildinformation kann der Bildschirm 22 auch so ausgestaltet sein, daß dieser als Hintergrundbeleuchtung für konventionelle Röntgenfilme dienen kann. Vorzugsweise ist hierzu der Bildschirm 22 in einem Beleuchtungsmodus betreibbar, in welchem die Bildschirmfläche einen gleichmäßig hellen, Licht aussendenden Hintergrund bildet. Vor diesen hellen Hintergrund können Röntgenfilme angebracht und betrachtet werden.

Darüber hinaus umfasst die Workstationeinrichtung 20 ein Bedienfeld 24 zur Steuerung der Workstationeinrichtung 20 und/oder zum Modifizieren der erfassten Bildinformation. Das Bedienfeld 24 ist vorzugsweise als sogenanntes Touch Screen ausgebildet, bei welchem in einer entsprechend ausgestalteten Anzeigeeinrichtung Symbole für einzelne Steuerungselemente und/oder Betriebsmodi angezeigt und durch Berühren betätigt bzw. ausgewählt werden können.

Vorzugsweise werden der Bildschirm 22 und das Bedienfeld 24 in einem einzigen Touch Screen zusammengefaßt, bei welchem in der Anzeigeeinrichtung neben den Steuerungselementen und/oder Betriebsmodi auch die erfassten digitalen Bildinformationen darstellt werden. Hierdurch wird eine einfach herzustellende und besonders kompakte Variante der Vorrichtung erhalten.

Alternativ zu der in Figur 1 dargestellten Workstationeinrichtung 20 kann diese auch lediglich einen Bildschirm 22 oder ein Bedienfeld 24 aufweisen. Eine Kombination dieser beiden Elemente, die eine Einheit bilden, hat jedoch den Vorteil, dass jede Modifizierung der Bildinformation zeitgleich auf dem Bildschirm 22 dargestellt werden kann, wodurch der Anwender der Vorrichtung den jeweiligen Effekt der Modifizierungen unmittelbar kontrollieren kann.

Durch das Bedienfeld 24 können auch die anderen Komponenten der Vorrichtung bedient werden, so dass das Bedienfeld 24 als zentrale Steuerplattform dient.

Wie aus Figur 1 ersichtlich ist, ist der Bildschirm 22 im Wesentlichen parallel zu einer größten Seitenfläche der Workstationeinrichtung 20 angeordnet. Durch Verwendung eines oben beschriebenen Flachbildschrims wird so eine besonders flache Gestaltung, also eine geringe Gerätetiefe, der Workstationeinrichtung 20 gewährleistet.

Als eine dritte Komponente ist eine Hardcopyeinrichtung 26 vorgesehen. Diese Hardcopyeinrichtung 26 dient der Herstellung einer Hardcopy mit der ausgelesenen Bildinformation des Bildträgers ausgehend von einem Hardcopyrohling, wie z. B. einem entsprechend geeigneten Bogen aus Papier, beschichtetem Papier oder Kunststofffolie. Ein Gehäusebereich der Hardcopyeinrichtung 26 bildet eine Kassettenhalterung 28, welche zur Aufnahme wenigstens einer Kassette 13 ausgebildet ist.

Außerdem kann das Innere des Gehäuses 30 zur Aufnahme von Hardcopyrohlingen ausgebildet sein, wobei das Gehäuse 30 insbesondere im Bereich der Kassettenhalterung 28 geöffnet werden kann, um die Hardcopyrohlinge in die Hardcopyeinrichtung 26 einzuführen.

Für fertige Hardcopies, gegebenenfalls aber auch für Hardcopyrohlinge, ist eine vorzugsweise lösbar am Gehäuse 30 der Hardcopyeinrichtung 26 befestigte Halterung 32 vorgesehen. Die Halterung 32 ist im dargestellten Beispiel eine Auflagefläche mit einer Stoßkante am unteren Ende der Fläche, die in einem flachen Winkel zur Vertikalen geneigt ist.

Da die Hardcopyrohlinge bzw. die Hardcopies stets parallel zur größten Seitenfläche der Hardcopyeinrichtung 26 aufgenommen, gelagert sowie während des Bedruckens transportiert und ausgegeben werden, ist eine äußerst flache Ausgestaltung der Hardcopyeinrichtung 26 realisiert.

Die Workstationeinrichtung 20 kann nun entweder vor dem Gehäuse 12 des Scanners 10 und/oder vor dem Gehäuse 30 der Hardcopyeinrichtung 26 angeordnet und an dem jeweiligen Gehäuse 12 bzw. 30, vorzugsweise lösbar, befestigt werden. Sowohl die Hardcopyeinrichtung 26 als auch der Scanner 10 können zur Verbindung mit der Workstationeinrichtung 20 sogenannte plug and play"-Anschlüsse 34 und 36 aufweisen. Durch die Verbindung der einzelnen Komponenten mittels "plug and play"--Anschlüssen kann ein Daten- und Stromfluß zwischen den Komponenten auf einfache Weise realisiert werden. Mindestens ein entsprechender Anschluß, der in Figur 1 aus perspektivischen Gründen nicht zu sehen ist, befindet sich an der Workstationeinrichtung 20. Durch die "plug and play"--Anschlüsse wird ein einfaches Zusammensetzen der einzelnen Komponenten ermöglicht, ohne die Komponenten durch Leitungen verbinden zu müssen.

Dieses modulare System wird außerdem durch geeignete Ausgestaltungen zur mechanische Kopplung der Komponenten, wie z. B. einfach lösbare Klemm- und/oder Schnappverbindungen am Gehäuse 12 bzw. 30 der Komponenten, ergänzt. Je nach Ausgestaltung der Komponenten kann vorgesehen sein, dass, wie hier für das Halterungselement 16 beispielhaft gezeigt, einzelne Elemente vor der modularen Kopplung entfernt werden müssen.

Neben den oben beschriebenen Kombinationen kann beispielsweise auch eine Kopplung von Scanner 10 und Hardcopyeinrichtung 26 oder eine Kombination von Hardcopyeinrichtung 26 und Workstationeinrichtung 20 vorgesehen sein.

Bei der Kombination von Scanner 10 und Hardcopyeinrichtung 26 kann die erfasste Bildinformation, ohne vorher auf einem Bildschirm 22 betrachtet zu werden, als Hardcopy ausgegeben werden. Ein solches System ist für solche Anwendungsfälle, wie z. B. Standarduntersuchungen oder Untersuchungsreihen, besonders geeignet, in denen Hardcopies einer großen Anzahl von Röntgenbildern angefertigt werden müssen, ohne dass eine vorherige visuelle Kontrolle und gegebenenfalls Manipulation der erfassten Bilddaten erwünscht oder erforderlich ist.

Besonders bevorzugt ist die Ausführungsform mit allen drei Komponenten, nämlich Scanner 10, Workstationeinrichtung 20 und Hardcopyeinrichtung 26. Wie bei der Verbindung von zwei Komponenten kann die Hardcopyeinrichtung 26 zu diesem Zweck durch "plug and play"-Anschlüsse 37 und zusätzlich gegebenenfalls auch durch mechanische Ausgestaltungen mit dem Scanner 10 verbunden werden. Diese beiden Komponenten sind dann entlang einer Ebene nebeneinander angeordnet. Die Kassettenhalterung 28 der Hardcopyeinrichtung 26 kann in diesem Fall genauso wie bei einer Kombination von Scanner 10 und Hardcopyeinrichtung 26 der Zuführung von Kassetten 13 in die Öffnung 18 des Scanners 10 dienen. Diese Funktion kann auch realisiert werden, wenn die Hardcopyeinrichtung 26 lediglich nahe dem Scanner 10 angeordnet ist, wobei die Kassettenhalterung 28 in diesem Fall entsprechend modifiziert werden muß. Außerdem ist eine Verbindung von Scanner 10 und Hardcopyeinrichtung 26 durch ein Zwischenelement denkbar, das gegebenenfalls auch zur Bereitstellung der Kassette für den Scanner 0 beitragen kann.

Es ist außerdem zu berücksichtigen, dass auch die Kombination von Workstationeinrichtung 20 und Hardcopyeinrichtung 26, wie sie in der Figur 1 dargestellt ist, mit dem Scanner seitlich verbunden werden kann.

Durch die Kombination der drei Elemente Scanner 10, Workstationeinrichtung 20 und Hardcopyeinrichtung 26 wird ein äußerst kompaktes System bereitgestellt, das alle Funktionen eines herkömmlichen, sehr viel Raum einnehmenden Röntgenarbeitsplatzes bestens erfüllt. Im Gegensatz zu den aus dem Stand der Technik bekannten "stand alone"-Geräten ermöglicht die Erfindung eine vollständige Installation des Röntgenarbeitsplatzes in einem Röntgenraum, der durch die notwendige Abschirmung räumlich meist sehr begrenzt ist.

In Figur 2 ist eine weitere alternative Ausführungsform einer Vorrichtung zur Durchführung eines digitalen Radiographie-Verfahrens schematisch dargestellt. Auch hier besteht die Vorrichtung aus einem Scanner (nicht sichtbar), vor dem eine Workstationeinrichtung 20 angebracht ist und neben dem eine Hardcopyeinrichtung 26 positioniert ist. Auch diese Hardcopyeinrichtung 26 weist eine Halterung 32 für mindestens eine Hardcopy und/oder mindestens einen Hardcopyrohling auf. Unterhalb der Workstationeinrichtung 20 ist außerdem eine zur Aufnahme mehrerer Kassetten 13 ausgebildete weitere Kassettenhalterung 40 vorgesehen, in welcher die Kassetten 13 vorzugsweise vor und/oder nach dem Auslesen im Scanner 10 gelagert werden können. Die Kassettenhalterung 40 kann entweder am Scanner oder an der Workstationeinrichtung 20, insbesondere lösbar, befestigt sein.

Soll die Bildinformation eines in einer Kassette 13 befindlichen Bildträgers ausgelesen werden, wird die entsprechende Kassette 13 von einem Bediener aus der Kassettenhalterung 40 entnommen und an der Öffnung 18 des Scanners positioniert. Die Kassette 13 wird hierzu an die Kassettenhalterung 28 am Gehäuse 30 der Hardcopyeinrichtung 26 angelegt und schließlich zur Öffnung 18 des Scanners geführt. Diese Position der Kassette 13 ist auch im rechten unteren Teil des in Figur 1 dargestellten Ausführungsbeispiels gezeigt. Von dieser Position aus kann der in der Kassette 13 befindliche Bildträger mit einem, vorzugsweise im Scanner befindlichen, Transportmechanismus aus der Kassette 13 in den Scanner eingezogen und dort ausgelesen werden. Nach dem Auslesen wird der Bildträger wieder in die Kassette 13 zurückgeführt, wonach diese von der Öffnung 18 des Scanners entfernt und gegebenenfalls wieder in der Kassettenhalterung 40 abgelegt werden kann.

Figur 3 zeigt den in Figur 1 dargestellten Scanner 10 in einer vergrößerten Frontansicht. Die Ausführungen im Zusammenhang mit dem in Figur 1 beschriebenen Scanner 10 gelten entsprechend. Eine Rückansicht dieses Scanners 10 ist schematisch in Figur 4 wiedergegeben. In dieser Ansicht sind Ausgestaltungen zur Aufhängung 42 dargestellt. Diese Ausgestaltungen 42 können mit an einer Wand vorgesehenen Schienen oder anderen Befestigungselementen wechselwirken, die eine Höhenverstellbarkeit erlauben. Alternativ kann die Höhenverstellbarkeit auch durch entsprechende Ausgestaltungen 42 zur Aufhängung an dem Gehäuse 12 des Scanners 10 erreicht werden. Die Höhenverstellbarkeit ist äußerst vorteilhaft, da auf diese Weise die Position des Scanners 10 den individuellen Bedürfnissen angepasst werden kann. Durch die Aufhängung des Scanners 10 wird gleichzeitig eine Aufhängung der anderen mit dem Scanner verbundenen Komponenten erreicht.

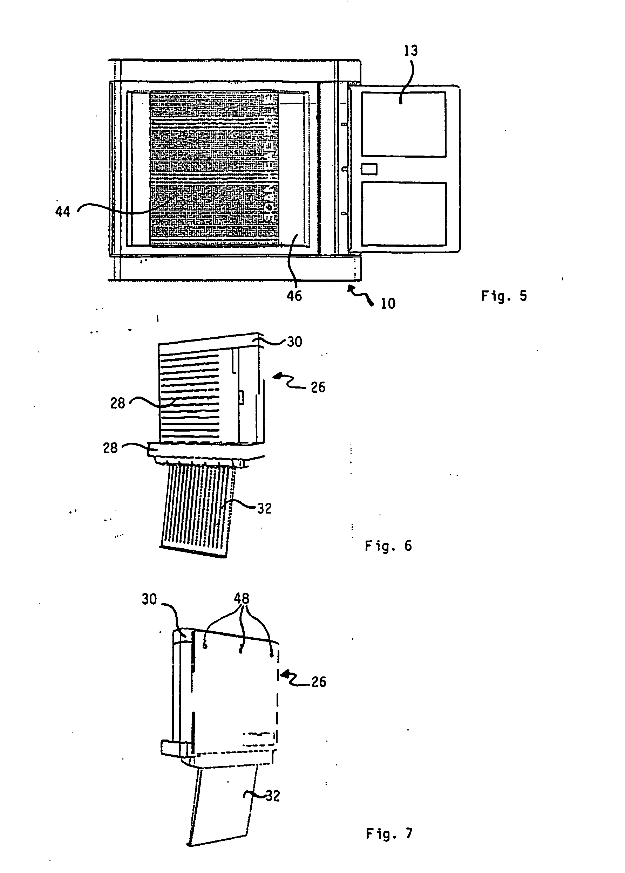

In Figur 5 ist der Scanner 10 in einer aufgehängten Stellung teilweise im Querschnitt dargestellt. In diesem Beispiel liegt der mittels einer geeigneten Transporteinrichtung (nicht dargestellt) aus der Kassette 13 entnommene Bildträger 44 auf einer Scanbühne 46 im Inneren des Scanners 10 und kann in dieser Lage ausgelesen werden. Die Scanbühne 46 ist im Wesentlichen parallel oder leicht geneigt zu der Wand angeordnet, an welcher der Scanner 10 aufgehängt ist. Dadurch wird eine besonders flache Ausführung des Scanners 10 gewährleistet, wobei eine Gerätetiefe von weniger als 30 cm erreicht wird.

Die Bildinformation wird vorzugsweise zeilenweise ausgelesen, wobei ein beweglicher Scankopf über den auf der Scanbühne 46 im Scanner 10 liegenden Bildträger 44 bewegt wird oder der Bildträger 44 an einem stationären Scankopf vorbeibewegt wird. Letzeres erfolgt vorzugsweise während der Entnahme des Bildträgers 44 aus der Kassette 13 oder dessen Rückführung in die Kassette 13. Der entsprechende stationäre Scankopf ist hierbei im Bereich der Öffnung 18 im Innern des Scanners 10 angeordnet.

Zur Erreichung einer möglichst geringen Gerätetiefe des Scanners 10 ist ein besonders kompakter Aufbau des Scankopfes erforderlich. Der Scankopf weist hierzu eine linienförmige Lichtquelle zur Beleuchtung eines linienförmigen Bereichs des Bildträgers und einen linienförmigen Detektor zur ortsaufgelösten Erfassung des im beleuchteten Bereich des Bildträgers angeregten Emissionslichts auf. Als Lichtquelle werden vorzugsweise Leuchtdioden oder Laserdioden eingesetzt, die in der Weise entlang einer Reihe angeordnet sind, dass sich deren Lichtstrahlen derart überlagern, dass auf dem Bildträger ein linienförmiger Bereich mit im Wesentlichen konstanter Intensität beleuchtet wird. Als ortsauflösender Detektor wird vorzugsweise ein lineares Array aus Photodioden oder Charge-Coupled-Devices (CCDs) eingesetzt. Ein derart aufgebauter Scankopf erlaubt ein zeilenweises und damit schnelles Auslesen von Bildinformation aus dem Bildträger und ist darüber hinaus sehr kompakt, so daß hierdurch eine sehr geringe Gerätetiefe des Scanners 10 und damit auch der gesamten Vorrichtung zur Durchführung eines digitalen Radiographie--Verfahrens erzielt wird.

Werden Scankopf und Bildträger mit einem geeigneten Transportmechanismus kontinuierlich relativ zueinander bewegt und dabei sukzessive Zeile für Zeile der Bildinformation des Bildträgers ausgelesen, werden schließlich Daten eines Gesamtbildes der im Bildträger gespeicherten Bildinformation erhalten. Die, insbesondere digitalen, Daten können dann in einer zentralen Recheneinheit, insbesondere in der Workstationeinrichtung 20, verarbeitet, dargestellt und/oder gespeichert werden.

Ein entsprechender Transportmechanismus zur Bewegung des Scankopfes über den Bildträger umfaßt vorzugsweise einen Linearantrieb, bei welchem die Rotationsbewegung eines Antriebsmotors in eine Linearbewegung eines Seilantriebs, durch welchen der Scankopf bewegt wird, umgesetzt wird. Der Scankopf wird hierbei bevorzugt an der Scanbühne 46 selbst geführt, wobei die Scanbühne entsprechende separate Führungsflächen aufweisen kann, an welchen der Scankopf geführt wird. Auf diese Weise werden besonders geringe Abstands- und Lagetoleranzen bei gleichzeitig kompaktem Aufbau des Transportmechanismus erreicht.

Als kompakter und zuverlässiger Mechanismus zur Bewegung des Bildträgers am stationären Scankopf vorbei eignet sich beispielsweise ein im Scanner 10 angeordneter Greifarm, welcher zum Herausziehen des Bildträgers aus der Kassette und zum Hineinschieben des Bildträgers in die Kassette geeignet ist und dabei den Bildträger am Scankopf kontinuierlich vorbeibewegt, so daß ein sukzessives zeilenweises Auslesen der Bildinformation erfolgen kann. Der Bildträger weist hierzu geeignete Konturen auf, insbesondere Aussparungen, in welche der Greifarm eingreifen kann.

Im Scanner 10 kann außerdem eine Löscheinrichtung (nicht dargestellt), insbesondere eine Löschlampe, vorgesehen sein, mit deren Hilfe die Bildinformation des Bildträgers nach dem Ausleseprozess gelöscht wird, damit der Bildträger für eine erneute Röntgenaufnahme verwendet werden kann. Die Löscheinrichtung kann im Scanner 10 derart angebracht und angesteuert sein, dass eine vollständige Löschung der nach dem Auslesen im Bildträger verbliebenen Bildinformation während der Rückführung des Bildträgers in die Kassette erfolgt. Dies wird beispielsweise durch eine Anordnung der Löscheinrichtung im Bereich der Öffnung 18 des Scanners 10 und ein Einschalten der Löscheinrichtung während der Rückführung des Bildträgers erreicht. Alternativ kann die Löscheinrichtung am Scankopf angebracht sein und mit diesem über den Bildträger bewegt werden. In einer weiteren Alternative kann das von der Löschlampe ausgehende Licht mit geeigneten optischen Mitteln, wie z. B. Spiegeln und/oder lichtstreuenden Mitteln, derart im Inneren des Scanners 10 verteilt werden, daß ein Löschen der gesamten Fläche des Bildträgers auf einmal möglich ist. Die Löschlampe wird hierbei zum gegebenen Zeitpunkt kurz ein- und wieder ausgeschaltet.

In Figur 6 ist eine vergrößerte schematische Frontansicht einer Hardcopyeinrichtung 26 dargestellt, wobei die Ausführungen zu Figur 1 entsprechend gelten. Wie aus der Rückansicht dieser Hardcopyeinrichtung 26 in Figur 7 hervorgeht, kann auch die Hardcopyeinrichtung 26 Ausgestaltungen 48 zur Aufhängung aufweisen, die der Wandmontage dienen. Auch hier kann eine Höhenverstellbarkeit durch entsprechende Modifizierung der Ausgestaltungen 48 und/oder der entsprechenden Befestigungselemente an der Wand und/oder durch eine demgemäß geartete Aufhängevorrichtung realisiert werden. Bei einer Kombination von Scanner 10 und Hardcopyeinrichtung 26 können beide Komponenten oder nur der Scanner entsprechende Ausgestaltungen zur Aufhängung aufweisen, da die Komponenten so koppelbar sind, dass die Hardcopyeinrichtung 26 durch den Scanner 10 bei der Wandmontage gehalten wird.

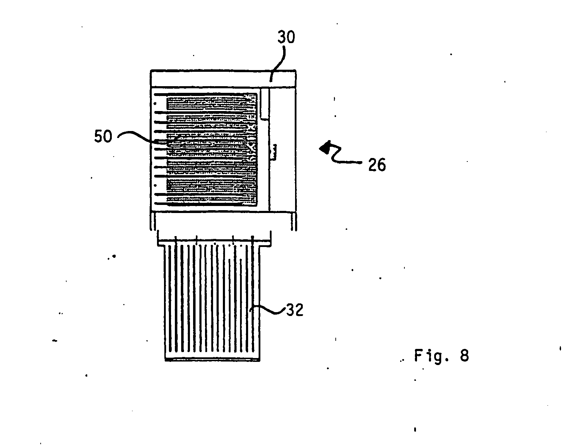

In Figur 8 ist die Hardcopyeinrichtung 26 teilweise im Querschnitt an einer Wand montiert dargestellt. Es ist zu erkennen, dass die Hardcopyrohlinge 50 im Innern der Hardcopyeinrichtung 26 nahezu parallel zur größten Seitenfläche der Hardcopyeinrichtung 26 und damit auch parallel zur Wand gelagert werden können und dass diese entlang einer ebenfalls parallelen oder leicht geneigten Printebene positionierbar sind. Auch der Transport der Hardcopyrohlinge bzw. der Hardcopies kann im Wesentlichen parallel zu einer größten Seitenfläche der Hardcopyeinrichtung 26 und damit auch parallel zur Wand, an der die Hardcopyeinrichtung 26 aufgehängt ist, erfolgen. Auf diese Weise kann die Gerätetiefe der Hardcopyeinrichtung 26 auf weniger als 30 cm minimiert werden.

Wie im Zusammenhang mit den Ausführungsbeispielen näher erläutert wurde, erfolgt die Wandmontage der einzelnen Komponenten, d. h. des Scanners 10 und/oder der Workstationeinrichtung 20 und/oder der Hardcopyeinrichtung 26, vorzugsweise hängend. Eine Wandmontage der jeweiligen Komponente kann jedoch prinzipiell auf jede Art der Anbringung an eine Wand erfolgen, bei welcher keine Standfläche für die jeweilige Komponente auf dem Boden erforderlich ist. Die jeweilige Komponente ist dabei im Wesentlichen nur an der Wand befestigt. Die Befestigung an der Wand kann hierbei direkt, z. B. durch Aufhängen, Festschrauben und dergleichen, oder indirekt, z.B. durch Aufstellen oder Einsetzen der Komponente auf bzw. in eine an der Wand befestigte Halterung oder durch Anbringen an ein an der Wand befestigtes und zur Höhenverstellung der Komponente ausgebildetes Halterungssystem, erfolgen.

Die erfindungsgemäße Wandmontage der kompakten Vorrichtung erlaubt in vielen Fällen eine Integration dieser Vorrichtung in einem Röntgenraum, obwohl dort der zur Verfügung stehende Standplatz meist durch den hohen Abschirmaufwand begrenzt ist. Die Integration der Vorrichtung in den Röntgenraum führt zu erheblichen Vorteilen im Arbeitsablauf einer Röntgenuntersuchung, da hierdurch eine schnelle Kontrolle der Aufnahmequalität in Form einer Darstellung der erfaßten Bilddaten auf einem Bildschirm und/oder einer Hardcopy ermöglicht wird und ein Verlassen des Röntgenraums bzw. des in diesem Raum befindlichen Patienten zur Diagnose anhand der Röntgenaufnahme nicht mehr erforderlich ist. Die Aufhängung innerhalb des Röntgenraums kann insbesondere dort erfolgen, wo vorher ein konventioneller Leuchtschirm angebracht war, um einen Röntgenfilm zu betrachten.

## Patentansprüche

1. Hardcopyvorrichtung zur Ausgabe einer Hardcopy einer durch einen fotostimulierbaren Bildträger (44) gewonnenen Bildinformation, wobei die Hardcopyvorrichtung (26) derart für eine Wandmontage ausgebildet ist, dass eine größte Seitenfläche der Hardcopyvorrichtung (26) im Wesentlichen parallel zu einer Wand an der Wand montierbar ist, und die Hardcopyvorrichtung eine Verbindung zu einem Scanner (10) aufweist, der zum Erfassen der Bildinformation des in einer Kassette (13) bereitgestellten fotostimulierbaren Bildträgers (44) vorgesehen ist, **dadurch gekennzeichnet, dass** die Hardcopyvorrichtung (26) eine Kassettenhalterung (28) zur Lagerung mindestens einer Kassette (13) mit mindestens einem fotostimulierbaren Bildträger (44) und/oder zum Bereitstellen einer Kassette (13) mit mindestens einem fotostimulierbaren Bildträger (44) für den Scanner (10) aufweist.

2. Hardcopyvorrichtung nach Anspruch 1, **dadurch gekennzeichnet, dass** die Harcopyvorrichtung (26) zu einer hängenden Wandmontage mindestens eine Ausgestaltung (48) zur Aufhängung, insbesondere mindestens ein Aufhängeelement, aufweist.

3. Hardcopyvorrichtung nach Anspruch 2, **dadurch gekennzeichnet, dass** die mindestens eine Ausgestaltung (48) zur Aufhängung derart ausgebildet ist, dass die Hardcopyvorrichtung (26) höhenverstellbar ist.

4. Hardcopyvorrichtung nach einem der vorhergehenden Ansprüche, **dadurch gekennzeichnet, dass** ein Gehäusebereich der Hardcopyvorrichtung (26) ein Halterungselement der Kassettenhalterung (28) bildet, auf dem die mindestens eine Kassette (13) angeordnet werden kann.

5. Hardcopyvorrichtung nach einem der vorhergehenden Ansprüche, **dadurch gekennzeichnet, dass** die Kassettenhalterung (28) ein Halterungselement aufweist, das an einem Gehäuse (30) der Hardcopyvorrichtung (26), insbesondere lösbar, befestigt ist.

6. Hardcopyvorrichtung nach einem der vorhergehenden Ansprüche, **dadurch gekennzeichnet, dass** die Kassettenhalterung (28) ein Halterungselement aufweist, das im Wesentlichen vor oder unter einem Gehäuse (30) der Hardcopyvorrichtung (26) angeordnet ist.

7. Hardcopyvorrichtung nach einem der vorhergehenden Ansprüche, **dadurch gekennzeichnet, dass** die Kassettenhalterung (28) derart ausgebildet ist, daß die von der Kassettenhalterung (28) aufgenommene mindestens eine Kassette (13) im Wesentlichen parallel zu einer größten Seitenfläche der Hardcopyvorrichtung (26) angeordnet ist.

8. Hardcopyvorrichtung nach einem der vorhergehenden Ansprüche, **dadurch gekennzeichnet, dass** die Hardcopyvorrichtung (26) eine Halterung für mindestens einen Hardcopyrohling (50), insbesondere einen Film, und/oder eine Halterung für mindestens eine Hardcopy mit der Bildinformation aufweist.

9. Hardcopyvorrichtung nach Anspruch 8, **dadurch gekennzeichnet, dass** die Halterung für den mindestens einen Hardcopyrohling (50) und/oder die Halterung für die mindestens eine Hardcopy derart ausgebildet und angeordnet ist, dass der von der Halterung aufgenommene mindestens eine Hardcopyrohling (50) und/oder die von der Halterung aufgenommene mindestens eine Hardcopy im Wesentlichen parallel zu einer größten Seitenfläche der Hardcopyvorrichtung (26) angeordnet ist.

10. Hardcopyvorrichtung nach einem der Ansprüche 8 oder 9, **dadurch gekennzeichnet, dass** die Halterung für den mindestens einen Hardcopyrohling (50) innerhalb eines Gehäuses (30) der Hardcopyvorrichtung (26) angeordnet ist.

11. Hardcopyvorrichtung nach einem der Ansprüche 8 bis 10, **dadurch gekennzeichnet, dass** die Halterung für die mindestens eine Hardcopy an einem Gehäuse (30) der Hardcopyvorrichtung (26), insbesondere lösbar, befestigt ist.

12. Hardcopyvorrichtung nach einem der Ansprüche 8 bis 11, **dadurch gekennzeichnet, dass** die Halterung für die mindestens eine Hardcopy im Wesentlichen unter einem Gehäuse (30) der Hardcopyvorrichtung (26) angeordnet ist.

13. Hardcopyvorrichtung nach einem der vorhergehenden Ansprüche, **dadurch gekennzeichnet, dass** die Hardcopyvorrichtung (26) derart ausgebildet ist, dass ein Hardcopy-Rohling (50) und/oder eine Hardcopy innerhalb der Hardcopyvorrichtung (26) im Wesentlichen parallel zu einer größten Seitenfläche der Hardcopyvorrichtung (26) bearbeitbar und/oder bewegbar ist.

14. Hardcopyvorrichtung nach einem der vorhergehenden Ansprüche, wobei im Gehäuse (12) des Scanners (10) eine Löscheinrichtung zum Löschen der Bildinformation des Bildträgers (44) vorgesehen ist.

15. Hardcopyvorrichtung nach einem der vorhergehenden Ansprüche, wobei der Scanner (10) einen Scankopf zum Erfassen der Bildinformation des Bildträgers (44) umfasst und der Scankopf
- eine Lichtquelle zur Beleuchtung des Bildträgers (44) mit Anregungslicht, welches zur Anregung von Emissionslicht im Bildträger (44) geeignet ist, und
- einen Detektor zum Erfassen des im beleuchteten Bildträger (44) angeregten Emissionslichts
aufweist.

16. Hardcopyvorrichtung nach Anspruch 15, wobei die Lichtquelle zur Beleuchtung eines linienförmigen Bereichs auf dem Bildträger (44) ausgebildet ist.

17. Hardcopyvorrichtung nach Anspruch 16, wobei die Lichtquelle eine Vielzahl von in einer geraden Linie angeordneten Leuchtmitteln, insbesondere Leuchtdioden (LEDs) und/oder Laserdioden, aufweist.

18. Hardcopyvorrichtung nach einem der Ansprüche 15 bis 17, wobei der Detektor zum ortsaufgelösten Erfassen des, insbesondere im linienförmigen Bereich des Bildträgers (44), angeregten Emissionslichts ausgebildet ist.

19. Hardcopyvorrichtung nach Anspruch 18, wobei der Detektor eine Vielzahl von entlang einer geraden Linie angeordneten Detektorelementen, insbesondere Photodioden oder Charge-Coupled-Devices (CCDs), aufweist.

20. Hardcopyvorrichtung nach einem der Ansprüche 15 bis 19, wobei ein erster Transportmechanismus zur Bewegung des Scankopfes über den Bildträger (44) vorgesehen ist.

21. Hardcopyvorrichtung nach Anspruch 20, wobei der erste Transportmechanismus als Linearantrieb ausgebildet ist, welcher einen Antriebsmotor und einen Seilantrieb umfaßt, wobei der Antriebsmotor und der Seilantrieb derart miteinander gekoppelt sind, daß eine Rotationsbewegung des Antriebsmotors in eine Linearbewegung des Seilantriebs umgesetzt wird.

22. Hardcopyvorrichtung nach einem der Ansprüche 15 bis 21, wobei eine Scanbühne (46) vorgesehen ist, auf welcher der Bildträger (44) aufliegen und an welcher der Scankopf geführt werden kann.

23. Hardcopyvorrichtung nach Anspruch 22, wobei die Scanbühne (46) separate Führungsflächen aufweist, an welchen der Scankopf geführt werden kann.

24. Hardcopyvorrichtung nach einem der Ansprüche 15 bis 23, wobei ein zweiter Transportmechanismus zur Bewegung des Bildträgers (44) am Scankopf vorbei vorgesehen ist.

25. Hardcopyvorrichtung nach Anspruch 24, wobei der zweite Transportmechanismus mindestens einen Greifarm zur Entnahme eines in einer Kassette (13) bereitgestellten Bildträgers (44) und/oder zur Rückführung eines herausgezogenen Bildträgers (44) in die Kassette (13) umfaßt, wobei der Bildträger (44) während der Entnahme bzw. Rückführung am Scankopf vorbei bewegt wird.

## Claims

1. A hardcopy apparatus for issuing a hardcopy of image information obtained by means of a photostimulatable image carrier (44), the hardcopy apparatus (26) being designed for wall mounting such that a large side surface of the hardcopy apparatus (26) can be mounted on the wall substantially parallel to a wall, and the hardcopy apparatus has a connection to a scanner (10) which is provided to record the image information of the photostimulatable image carrier (44) provided in a cassette (13), **characterised in that** the hardcopy apparatus (26) has a cassette holder (28) for storing at least one cassette (13) with at least one photostimulatable image carrier (44) and/or for providing a cassette (13) with at least one photostimulatable image carrier (44) for the scanner (10).

2. The hardcopy apparatus according to Claim 1, **characterised in that** the hardcopy apparatus (26) for hanging wall mounting has at least one configuration (48) for hanging, in particular at least one hanging element.

3. The hardcopy apparatus according to Claim 2, **characterised in that** the at least one configuration (48) for hanging is designed such that the hardcopy apparatus (26) is height-adjustable.

4. The hardcopy apparatus according to any of the preceding claims, **characterised in that** a housing region of the hardcopy apparatus (26) forms a holding element of the cassette holder (28) on which the at least one cassette (13) can be disposed.

5. The hardcopy apparatus according to any of the preceding claims, **characterised in that** the cassette holder (28) has a holding element which is attached, in particular releaseably, to a housing (30) of the hardcopy apparatus (26).

6. The hardcopy apparatus according to any of the preceding claims, **characterised in that** the cassette holder (28) has a holding element which is disposed substantially in front of or beneath a housing (30) of the hardcopy apparatus (26).

7. The hardcopy apparatus according to any of the preceding claims, **characterised in that** the cassette holder (28) is designed such that the at least one cassette (13) accommodated by the cassette holder (28) is disposed substantially parallel to a large side surface of the hardcopy apparatus (26).

8. The hardcopy apparatus according to any of the preceding claims, **characterised in that** the hardcopy apparatus (26) has a holder for at least one hardcopy blank (50), in particular a film, and/or a holder for at least one hardcopy with the image information.

9. The hardcopy apparatus according to Claim 8, **characterised in that** the holder for the at least one hardcopy blank (50) and/or the holder for the at least one hardcopy is designed and disposed such that the at least one hardcopy blank (50) accommodated by the holder and/or the at least one hardcopy accommodated by the holder is disposed substantially parallel to a large side surface of the hardcopy apparatus (26).

10. The hardcopy apparatus according to either of Claims 8 or 9, **characterised in that** the holder for the at least one hardcopy blank (50) is disposed within a housing (30) of the hardcopy apparatus (26).

11. The hardcopy apparatus according to any of Claims 8 to 10, **characterised in that** the holder for the at least one hardcopy is attached, in particular releaseably, to a housing (30) of the hardcopy apparatus (26).

12. The hardcopy apparatus according to any of Claims 8 to 11, **characterised in that** the holder for the at least one hardcopy is disposed substantially beneath a housing (30) of the hardcopy apparatus (26).

13. The hardcopy apparatus according to any of the preceding claims, **characterised in that** the hardcopy apparatus (26) is designed such that a hardcopy blank (50) and/or a hardcopy can be processed and/or moved within the hardcopy apparatus (26) substantially parallel to a large side surface of the hardcopy apparatus (26).

14. The hardcopy apparatus according to any of the preceding claims, a deleting device being provided in the housing (12) of the scanner (10) for deleting the image information of the image carrier (44).

15. The hardcopy apparatus according to any of the preceding claims, the scanner (10) comprising a scanning head for recording the image information of the image carrier (44), and the scanning head having
- a light source for illuminating the image carrier (44) with stimulation light which is suitable for stimulating emission light in the image carrier (44), and
- a detector for recording the emission light stimulated in the illuminated image carrier (44).

16. The hardcopy apparatus according to Claim 15, the light source being designed to illuminate a linear region on the image carrier (44).

17. The hardcopy apparatus according to Claim 16, the light source having a plurality of illuminants disposed in a straight line, in particular light-emitting diodes (LEDs) and/or laser diodes.

18. The hardcopy apparatus according to any of Claims 15 to 17, the detector being designed for the locally resolved recording of the emission light stimulated in particular in the linear region of the image carrier (44).

19. The hardcopy apparatus according to Claim 18, the detector having a plurality of detector elements, in particular photodiodes or charge coupled devices (CCDs), disposed along a straight line.

20. The hardcopy apparatus according to any of Claims 15 to 19, a first conveyance mechanism being provided for moving the scanning head over the image carrier (44).

21. The hardcopy apparatus according to Claim 20, the first conveyance mechanism being designed as a linear drive which comprises a drive motor and a cable drive, the drive motor and the cable drive being coupled to one another such that a rotational movement of the drive motor is converted into a linear movement of the cable drive.

22. The hardcopy apparatus according to any of Claims 15 to 21, a scanning stage (46) being provided on which the image carrier (44) can lie and on which the scanning head can be moved.

23. The hardcopy apparatus according to Claim 22, the scanning stage (46) having separate guide surfaces on which the scanning head can be moved.

24. The hardcopy apparatus according to any of Claims 15 to 23, a second conveyance mechanism being provided for moving the image carrier (44) past the scanning head.

25. The hardcopy apparatus according to Claim 24, the second conveyance mechanism comprising at least one gripping arm for removing an image carrier (44) provided in a cassette (13) and/or for moving an image carrier (44) which has been removed back into the cassette (13), the image carrier (44) being moved past the scanning head during the removal and return.

## Revendications

1. Dispositif de sortie sur copie papier d'une information d'image obtenue par un support d'images (44) pouvant être photo-stimulé, le dispositif de sortie sur copie papier (26) étant agencé pour un montage mural de telle sorte qu'une surface latérale la plus grande du dispositif de sortie sur copie papier (26) puisse être montée sur un mur sensiblement parallèlement au mur, et le dispositif de sortie sur copie papier comportant une liaison vers un scanneur (10), qui est prévu pour la saisie de l'information d'image du support d'images (44) pouvant être photo-stimulé mis à disposition dans une cassette (13), **caractérisé en ce que** le dispositif de sortie sur copie papier (26) comporte un porte-cassette (28) destiné au logement d'au moins une cassette (13) contenant au moins un support d'images (44) pouvant être photo-stimulé et/ou à la mise à disposition du scanneur (10) d'une cassette (13) contenant au moins un support d'images (44) pouvant être photo-stimulé.

2. Dispositif de sortie sur copie papier selon la revendication 1, **caractérisé en ce que**, pour un montage mural suspendu, le dispositif de sortie sur copie papier (26) comporte au moins une conformation de suspension (48), notamment au moins un élément de suspension.

3. Dispositif de sortie sur copie papier selon la revendication 2, **caractérisé en ce que** l'au moins une conformation de suspension (48) est agencée de telle sorte que le dispositif de sortie sur copie papier (26) soit réglable en hauteur.

4. Dispositif de sortie sur copie papier selon l'une des revendications précédentes, **caractérisé en ce qu'**une zone de boîtier du dispositif de sortie sur copie papier (26) forme un élément de retenue du porte-cassette (28), sur lequel l'au moins une cassette (13) peut être disposée.

5. Dispositif de sortie sur copie papier selon l'une des revendications précédentes, **caractérisé en ce que** le porte-cassette (28) comporte un élément de retenue qui est fixé, notamment de façon amovible, sur un boîtier (30) du dispositif de sortie sur copie papier (26).

6. Dispositif de sortie sur copie papier selon l'une des revendications précédentes, **caractérisé en ce que** le porte-cassette (28) comporte un élément de retenue, qui est pour l'essentiel disposé devant ou sous un boîtier (30) du dispositif de sortie sur copie papier (26).

7. Dispositif de sortie sur copie papier selon l'une des revendications précédentes, **caractérisé en ce que** le porte-cassette (28) est agencé de telle sorte que l'au moins une cassette (13) contenue dans le porte-cassette (28) soit positionnée pour l'essentiel parallèlement à une surface latérale la plus grande du dispositif de sortie sur copie papier (26).

8. Dispositif de sortie sur copie papier selon l'une des revendications précédentes, **caractérisé en ce que** le dispositif de sortie sur copie papier (26) comporte un support pour au moins un élément vierge (50) pour copie papier, notamment un film, et/ou un support pour au moins une copie papier avec l'information d'image.

9. Dispositif de sortie sur copie papier selon la revendication 8, **caractérisé en ce que** le support pour l'au moins un élément vierge (50) pour copie papier et/ou le support pour l'au moins une copie papier sont agencés et disposés de telle sorte que l'au moins un élément vierge (50) pour copie papier positionné sur le support et/ou l'au moins une copie papier positionnée sur le support soient pour l'essentiel disposés parallèlement à une surface latérale la plus grande du dispositif de sortie sur copie papier (26).

10. Dispositif de sortie sur copie papier selon l'une des revendications 8 ou 9, **caractérisé en ce que** le support pour l'au moins un élément vierge (50) pour copie papier est disposé dans un boîtier (30) du dispositif de sortie sur copie papier (26).

11. Dispositif de sortie sur copie papier selon l'une des revendications 8 à 10, **caractérisé en ce que** le support pour l'au moins une copie papier est fixé, notamment de façon amovible, sur un boîtier (30) du dispositif de sortie sur copie papier (26).

12. Dispositif de sortie sur copie papier selon l'une des revendications 8 à 11, **caractérisé en ce que** le support pour l'au moins une copie papier est pour l'essentiel disposé sous un boîtier (30) du dispositif de sortie sur copie papier (26).

13. Dispositif de sortie sur copie papier selon l'une des revendications précédentes, **caractérisé en ce que** le dispositif de sortie sur copie papier (26) est agencé de telle sorte qu'un élément vierge (50) pour copie papier et/ou une copie papier puissent être traités et/ou déplacés dans le dispositif de sortie sur copie papier (26), pour l'essentiel parallèlement à une surface latérale la plus grande du dispositif de sortie sur copie papier (26).

14. Dispositif de sortie sur copie papier selon l'une des revendications précédentes, dans lequel un système d'effacement pour effacer l'information d'image du support d'images (44) est prévu dans le boîtier (12) du scanneur (10).

15. Dispositif de sortie sur copie papier selon l'une des revendications précédentes, dans lequel le scanneur (10) est doté d'une tête de scannage pour la saisie de l'information d'image du support d'images (44), et la tête de scannage comporte
- une source lumineuse pour exposer le support d'images (44) à de la lumière de stimulation, qui est appropriée pour stimuler de la lumière d'émission dans le support d'images (44), et
- un détecteur pour la détection de la lumière d'émission stimulée dans le support d'images (44) éclairé.

16. Dispositif de sortie sur copie papier selon la revendication 15, dans lequel la source lumineuse est agencée pour éclairer une zone en forme de ligne sur le support d'images (44).

17. Dispositif de sortie sur copie papier selon la revendication 16, dans lequel la source lumineuse comporte une pluralité de moyens lumineux disposés sur une ligne droite, notamment des diodes électroluminescentes (LED) et/ou des diodes laser.

18. Dispositif de sortie sur copie papier selon l'une des revendications 15 à 17, dans lequel le détecteur est agencé pour la saisie en résolution locale de la lumière d'émission stimulée, notamment dans la zone en forme de ligne du support d'images (44).

19. Dispositif de sortie sur copie papier selon la revendication 18, dans lequel le détecteur comporte une pluralité d'éléments de détection disposés le long d'une ligne droite, notamment des photodiodes ou des dispositifs à couplage de charge (CCD).

20. Dispositif de sortie sur copie papier selon l'une des revendications 15 à 19, dans lequel un premier mécanisme de transport est prévu pour déplacer la tête de scannage au-dessus du support d'images (44).

21. Dispositif de sortie sur copie papier selon la revendication 20, dans lequel le premier mécanisme de transport est réalisé sous la forme d'un entraînement linéaire comportant un moteur d'entraînement et un entraînement par câble, le moteur d'entraînement et l'entraînement par câble étant couplés entre eux de telle sorte qu'un mouvement de rotation du moteur d'entraînement soit converti en un mouvement linéaire de l'entraînement par câble.

22. Dispositif de sortie sur copie papier selon l'une des revendications 15 à 21, dans lequel il est prévu un plateau de scannage (46) sur lequel est positionné le support d'images (44), et le long duquel la tête de scannage peut être guidée.

23. Dispositif de sortie sur copie papier selon la revendication 22, dans lequel le plateau de scannage (46) comporte des surfaces de guidage séparées, le long desquelles la tête de scannage peut être guidée.

24. Dispositif de sortie sur copie papier selon l'une des revendications 15 à 23, dans lequel il est prévu un deuxième mécanisme de transport pour déplacer le support d'images (44) le long de la tête de scannage.

25. Dispositif de sortie sur copie papier selon la revendication 24, dans lequel le deuxième mécanisme de transport comporte au moins un bras preneur pour prélever un support d'images (44) mis à disposition dans une cassette (13) et/ou pour ramener dans la cassette (13) un support d'images (44) retiré, le support d'images (44) étant déplacé le long de la tête de scannage pendant le prélèvement ou le retour.
